# EUROPÄISCHE PATENTSCHRIFT

(11) **EP 4 500 112 B1**
(45) Veröffentlichungstag und Bekanntmachung des Hinweises auf die Patenterteilung: **12.08.2026**
(21) Anmeldenummer: 23727250.5
(22) Anmeldetag: 10.05.2023
(51) Int. Cl.: G01C 21/34, B61L 15/00, B61L 27/14, G01C 21/36, B60W 50/08

(54) **FAHRERASSISTENZVORRICHTUNG FÜR EIN FAHRZEUG MIT AUSWÄHLBAREN INFORMATIONSKATEGORIEN**
DRIVER ASSISTANCE DEVICE FOR A VEHICLE WITH SELECTABLE INFORMATION CATEGORIES
DISPOSITIF D'AIDE À LA CONDUITE POUR VÉHICULE AVEC CATÉGORIES D'INFORMATIONS SÉLECTIONNABLES

(30) Priorität: 31.05.2022 DE 102022205546
(43) Veröffentlichungstag der Anmeldung: 05.02.2025
(73) Patentinhaber: Siemens Mobility GmbH, 80997 München (DE)
(72) Erfinder: WOLF, Günter, 90425 Nürnberg (DE)
(74) Vertreter: Siemens Patent Attorneys
(86) Internationale Anmeldenummer: PCT/EP2023/062449
(87) Internationale Veröffentlichungsnummer: WO 2023/232418

(56) Entgegenhaltungen:
- DE-A1- 102015 218 927
- US-A1- 2019 145 794

## Beschreibung

Die Erfindung betrifft eine Fahrerassistenzvorrichtung für ein Fahrzeug sowie ein Verfahren zum Betrieb einer Fahrerassistenzvorrichtung für ein Fahrzeug.

Grundsätzlich sind Fahrerassistenzvorrichtungen für Fahrzeuge bekannt. Diese werden fachmännisch häufig als Fahrerassistenzsystem (Englisch: Driver Assistance System oder Driver Advisory System). Ein Beispiel für ein Fahrerassistenzsystem ist ein Navigationssystem.

DE 11 2016 004 391 B4 beschreibt eine Dialogvorrichtung, die zusammen mit einer Sprachausgabeeinheit zur Ausgabe eines Tons in einem Innenraum eines Fahrzeugs im Fahrzeug angebracht ist und einen Dialog mit einem Fahrer des Fahrzeugs ausführt. Die Dialogvorrichtung weist einen Dialogausführungseinheit auf, die einen Konversationssatz in Richtung des Fahrers erzeugt und die Sprachausgabeeinheit steuert, um den Konversationssatz auszugeben. Eine Belastungsbestimmungseinheit bestimmt, ob eine Fahrbelastung auf den Fahrer in Bezug auf eine Straße, auf der das Fahrzeug fährt, hoch ist. Eine Äußerungssteuereinheit legt einen Verbotszustand fest, um der Dialogausführungseinheit ein Starten einer Äußerung zu verbieten, und legt einen Erlaubniszustand fest, um der Dialogausführungseinheit das Starten der Äußerung zu erlauben, wenn die Belastungsbestimmungseinheit bestimmt, dass die Fahrbelastung niedrig ist. Eine Informationenerlangungseinheit erlangt Nachrichteninformationen als eine Möglichkeit für einen Inhalt der durch die Dialogausführungseinheit ausgeführten Konversation von einer externen Vorrichtung des Fahrzeugs. Die Äußerungssteuereinheit legt zuvor eine Kategorie der Nachrichteninformationen, für die sich der Fahrer interessiert, als eine Präferenzkategorie fest. Die Äußerungssteuereinheit steuert die Dialogausführungseinheit, um eine Konversation in Richtung des Fahrers zu starten, wenn die Äußerungssteuereinheit den Erlaubniszustand festlegt und die Nachlässigkeitszustand-Bestimmungseinheit bestimmt, dass der Fahrer sich im Nachlässigkeitszustand befindet.

Das Dokument US 2019/0145794 A1 offenbart ein System und eine Vorrichtung zur Vorhersage von Konditionen entlang einer Strecke. Dazu werden Daten aus unterschiedlichen Quellen verwendet, zum Beispiel aktuelle Wetterdaten, um lokale Vorhersagen entlang der Strecke zu treffen und basierend auf einer Risikoanalyse die Streckenabschnitte unterschiedlichen Risikobewertungen oder Risikoprofilen zuzuordnen. Diese Auswertung wird dann, optional begleitet von passenden Empfehlungen, an einen Nutzer ausgegeben. Hierbei ist es zum Beispiel vorgesehen, dass unterschiedliche Kategorien von Informationen ausgewertet werden, wie Wind, Regen, etc. Innerhalb dieser Kategorien kann eine Gruppierung stattfinden, welche zum Beispiel Wertebereiche innerhalb einer Kategorie zusammenfasst oder Risikobewertungen innerhalb einer Kategorie anhand eines Entscheidungsbaumes erstellt. Zum Beispiel können in der Kategorie *"Wind"* verschiedene Wertebereiche (Gruppen) *"Windgeschwindigkeit 1", "Windgeschwindigkeit 2", "Windgeschwindigkeit 3"* beinhaltet sein, oder verschiedene Risikobewertungen, wie *"geringes Wind-Risiko", "moderates Wind-Risiko", "hohes Wind-Risiko".* Streckenabschnitte entlang der Route können dann den einzelnen Gruppen zugeordnet werden.

Vor diesem Hintergrund ist es Aufgabe der Erfindung, Fahrerassistenzvorrichtungen zu verbessern.

Diese Aufgabe wird durch die Gegenstände der unabhängigen Ansprüche gelöst.

Die erfindungsgemäße Fahrerassistenzvorrichtung umfasst eine von einem Fahrzeugführer wahrnehmbare Ausgabeeinrichtung, welche eingerichtet ist, wenigstens eine Informationsart einer Mehrzahl von Informationsarten auszugeben. Eine Speichereinrichtung ist eingerichtet, wenigstens eine Informationsart der Mehrzahl von Informationsarten einer Informationskategorie einer Mehrzahl von Informationskategorien zuzuordnen. Eine Eingabeeinrichtung ist eingerichtet, eine Auswahl wenigstens einer Informationskategorie der Mehrzahl von Informationskategorien zu empfangen. Die wenigstens eine Informationskategorie wird durch die Auswahl für die Ausgabe vorgegeben. Die Ausgabeeinrichtung ist eingerichtet, Informationsarten der ausgewählten Informationskategorie auszugeben.

Die Erfindung beruht auf der Erkenntnis, dass die Aufmerksamkeit von Fahrzeugführern durch die Ausgabe bestimmter Informationsarten unnötig belegt wird. Zudem kann die Ausgabe bestimmter Informationsarten, insbesondere bei häufiger Ausgabe, für den Fahrzeugführer belastend sein.

Die erfindungsgemäße Lösung behebt diese Probleme, indem unterschiedliche Informationsarten einer Informationskategorie zugeordnet werden können. Die Informationskategorie kann durch den Fahrzeugführer für die Ausgabe ausgewählt werden. Auf diese Weise hat der Fahrzeugführer die Möglichkeit bestimmte Informationskategorien von der Ausgabe auszunehmen und folglich seine Ablenkung durch unnötige Ausgaben von Informationen zu verringern. Demnach kann der Fahrzeugführer die Fahrerassistenzvorrichtung in vorgegebenen Grenzen individuell einstellen bzw. anpassen. Diese Grenzen werden durch eine Vorgabe der auszuwählbaren Informationskategorien, beispielsweise durch einen Fahrzeugbetreiber, vorgegeben.

Dadurch wird zum einen die Akzeptanz von Fahrerassistenzvorrichtungen bei Fahrzeugführern erhöht. Zudem können Randbedingungen, beispielsweise für einen sicheren Betrieb des Fahrzeugs, durch Vorgabe der wählbaren Informationskategorien festgelegt werden.

Das Fahrzeug ist beispielsweise ein Landfahrzeug (z. B. ein Automobil), ein Luftfahrzeug (z. B. ein Flugzeug) oder ein Wasserfahrzeug (z. B. ein Schiff).

Die Zuordnung erfolgt erfindungsgemäß, indem eine Zuordnungstabelle, welche jede Informationsart einer bereitgestellten, für eine Ausgabe mittels einer von einem Fahrzeugführer wahrnehmbaren Ausgabeeinrichtung vorgesehenen Mehrzahl unterschiedlicher Informationsarten einer Informationskategorie einer Mehrzahl von Informationskategorien zuordnet, auf der Speichereinrichtung gespeichert wird.

Vorzugsweise werden mehrere Informationsarten einer einzigen Informationskategorie zugeordnet. Eine Informationsart (der mehreren Informationsarten) kann alternativ mehreren Informationskategorien zugeordnet sein.

Die Auswahl der Informationskategorie erfolgt vorzugsweise aus einer Liste von Informationskategorien, wobei der Fahrzeugführer eine oder mehre Informationskategorien aus der Liste durch Setzen einer Markierung auswählt.

Die Ausgabe ist beispielsweise eine optische wahrnehmbare Ausgabe. Dazu weist die Ausgabeeinrichtung vorzugsweise eine optisch wahrnehmbare Anzeigeeinheit und/oder taktil wahrnehmbare Ausgabeeinheit auf. Die taktil wahrnehmbare Ausgabeeinheit ist vorzugsweise eingerichtet, die Ausgabe als Rütteln, Nudging, etc. auszugeben. Die taktil wahrnehmbare Ausgabeeinheit umfasst vorzugsweise ein Lenkrad, einen Sidestick, einen Fahr-Bremshebel und/oder eine Sitzfläche.

Die Eingabeeinrichtung ist beispielsweise eine Tastatur oder Teil der Anzeigeeinheit, beispielsweise in Form eines berührungssensitiven Displays.

Die Auswahl erfolgt vorzugsweise durch einen Fahrzeugführer.

Mit anderen Worten: Die Eingabeeinrichtung ist vorzugsweise eingerichtet, eine von einem Fahrzeugführer getätigte Auswahl zu empfangen bzw. aufzunehmen.

Der Fachmann versteht die Formulierung "Informationsarten der ausgewählten Informationskategorie auszugeben" vorzugsweise als "Informationsarten der ausgewählten und/oder vorgegebenen Informationskategorie auszugeben".

Nach einer weiteren bevorzugten Ausführungsform der erfindungsgemäßen Fahrerassistenzvorrichtung ist das Fahrzeug ein spurgebundenes Fahrzeug, insbesondere ein Schienenfahrzeug.

Das Schienenfahrzeug ist beispielsweise ein Triebzug.

Dieser Ausführungsform liegt die weitere Erkenntnis zugrunde, dass insbesondere das Führen eines spurgebundenen Fahrzeugs besondere Sorgfalt erfordert. Die erfindungsgemäße Fahrerassistenzvorrichtung leistet hierbei eine Verbesserung der Bedienfreundlichkeit der Fahrerassistenzvorrichtung und damit des Betriebs des Fahrzeugs. Dies hat positiven Einfluss auf das sichere Führen durch den Fahrzeugführer. Denn dieser kann besonders einfach und intuitiv, Informationskategorien von der Ausgabe ausnehmen und seine Aufmerksamkeit entsprechend anderweitig fokussieren.

Nach einer weiteren bevorzugten Ausführungsform der erfindungsgemäßen Fahrerassistenzvorrichtung umfasst die Mehrzahl von Informationskategorien statische Routeninformationen, welche statische Informationen in Bezug auf die Strecke repräsentieren.

Der Fachmann versteht unter dem Begriff "statische Routeninformationen" vorzugsweise Informationen in Bezug auf Objekte die sich entlang der Fahrstrecke des Fahrzeugs befinden und sich während einer Fahrt nicht ändern.

Ein Beispiel für statische Routeninformationen sind sogenannte "Points of Interest" (https://de.wikipedia.org/wiki/Point of Interest).

Die statischen Routeninformationen sind ein Beispiel für eine Informationskategorie, die vorzugsweise für ein Abwählen vorgesehen sind.

Bei einer weiteren bevorzugten Ausführungsform der erfindungsgemäßen Fahrerassistenzvorrichtung umfasst die Mehrzahl von Informationskategorien dynamische Routeninformationen, welche dynamische Informationen in Bezug auf die Strecke repräsentieren.

Der Fachmann versteht unter dem Begriff "dynamische Routeninformationen" vorzugsweise Informationen in Bezug auf Objekte die sich entlang der Fahrstrecke des Fahrzeugs befinden und sich während einer Fahrt verändern, beispielsweise bewegen können.

Ein Beispiel für dynamische Routeninformationen sind aktuelle Verkehrsinformationen, wie auf der Fahrstrecke vorhandene Staus, Personen im Gleis, etc.

Gemäß einer weiteren bevorzugten Ausführungsform der erfindungsgemäßen Fahrerassistenzvorrichtung umfasst die Mehrzahl von Informationskategorien Energiesparinformationen, welche Informationen zur Unterstützung einer energiesparenden Fahrweise repräsentieren.

Ein Beispiel für Energiesparinformationen sind Fahrempfehlungen für einen energiesparenden Betrieb des Fahrzeugs.

Nach einer weiteren bevorzugten Ausführungsform der erfindungsgemäßen Fahrerassistenzvorrichtung umfasst die Mehrzahl von Informationskategorien Batterieschutzinformationen, welche Informationen zur Unterstützung eines batterieschonenden Betriebs des Fahrzeugs repräsentieren.

Ein Beispiel für eine Batterieschutzinformation ist eine Füllstandsanzeige, welche den Füllstand einer Fahrzeugbatterie anzeigt. Ein weiteres Beispiel für eine Batterieschutzinformation ist eine Prognose, wie viele Kilometer bei aktuellem Füllstand der Fahrzeugbatterie fahrbar sind.

Die Batterieschutzinformation ist ein Beispiel für eine Informationskategorie, die vorzugsweise für ein Anwählen vorgesehen sind oder weiter vorzugsweise nicht abwählbar sind.

Gemäß einer weiteren bevorzugten Ausführungsform der erfindungsgemäßen Fahrerassistenzvorrichtung umfasst die Mehrzahl von Informationskategorien Zeitplaninformationen, welche Informationen zu einem Fahrplan des Fahrzeugs repräsentieren.

Ein Beispiel für eine Zeitplaninformation ist eine Verspätungsanzeige, welche eine Verspätung bei Ankunft an einer vorausliegenden Haltestelle prognostiziert.

Nach einer weiteren bevorzugten Ausführungsform der erfindungsgemäßen Fahrerassistenzvorrichtung umfasst die Mehrzahl von Informationskategorien Warnungen, welche Informationen in Bezug auf ein Risiko für den Betrieb des Fahrzeugs repräsentieren.

Ein Beispiel für einen bevorzugten Betrieb des Fahrzeugs ist eine Situation, in der ausschließlich Warnungen als auszugebende Informationskategorie von dem Fahrzeugführer gewünscht sind. So kann der Fahrzeugführer durch ausschließliche Auswahl dieser Informationskategorie oder durch Abwahl der anderen Informationskategorien dafür sorgen, dass ausschließlich Warnungen ausgegeben werden.

Warnungen sind ein Beispiel für eine Informationskategorie, die vorzugsweise für ein Anwählen vorgesehen sind oder weiter vorzugsweise nicht abwählbar sind.

Bei einer weiteren bevorzugten Ausführungsform der erfindungsgemäßen Fahrerassistenzvorrichtung umfasst die Ausgabe eine akustische wahrnehmbare Ausgabe.

Dies repräsentiert eine besonders vorteilhafte Ausführungsform, da akustische Ausgaben die Aufmerksamkeit des Fahrzeugführers besonders beeinträchtigen und belasten können.

Die akustisch wahrnehmbare Ausgabe umfasst vorzugsweise eine Sprachausgabe und/oder einen Signalton, wie einen Gong.

Die Erfindung betrifft ferner ein spurgebundenes Fahrzeug, welches eine Fahrerassistenzvorrichtung der vorstehend beschriebenen Art umfasst.

Die eingangs genannte Aufgabe wird ferner durch ein Verfahren zum Betrieb einer Fahrerassistenzvorrichtung gelöst. Bei dem Verfahren wird eine Mehrzahl unterschiedlicher Informationsarten bereitgestellt. Die Informationsarten sind für eine Ausgabe mittels einer von einem Fahrzeugführer wahrnehmbaren Ausgabeeinrichtung der Fahrerassistenzvorrichtung vorgesehen. Wenigstens eine Informationsart der Mehrzahl von Informationsarten wird einer Informationskategorie einer Mehrzahl von Informationskategorien zugeordnet. Wenigstens eine Informationskategorie der Mehrzahl von Informationskategorien wird unter Verwendung einer Eingabeeinrichtung für die Ausgabe ausgewählt, wobei die wenigstens eine Informationskategorie durch die Auswahl für die Ausgabe vorgegeben wird. Informationsarten der ausgewählten Informationskategorie werden mittels der Ausgabeeinrichtung ausgegeben.

Nach eine bevorzugten Ausführungsform des erfindungsgemäßen Verfahrens wird die wenigstens eine Informationskategorie ausgewählt, indem die wenigstens eine Informationskategorie für die Ausgabe angewählt wird und/oder indem eine andere Informationskategorie der Mehrzahl von Informationskategorien abgewählt wird.

Die vorstehende Ausführungsform umfasst den Fall, dass der Fahrzeugführer sämtliche Informationskategorien abwählt. Weiter vorzugsweise wählt der Fahrzeugführer sämtliche abwählbaren Informationskategorien ab, wobei bestimmte Informationskategorien nicht abwählbar sind.

Die Erfindung betrifft ferner ein Computerprogramm, umfassend Befehle, die bei der Ausführung des Programms durch eine Recheneinrichtung eines Fahrzeugs diese veranlassen, das vorstehend beschriebene Verfahren auszuführen. Die Erfindung betrifft ferner ein Computerprogrammprodukt mit einem Computerprogramm dieser Art.

Die Erfindung betrifft ferner ein computerlesbares Speichermedium, umfassend Befehle, die bei der Ausführung durch eine Recheneinrichtung eines Fahrzeugs diese veranlassen, das vorstehend beschriebene Verfahren auszuführen.

Zu Vorteilen, Ausführungsformen und Ausführungsdetails der Merkmale des erfindungsgemäßen spurgebundenen Fahrzeugs, des erfindungsgemäßen Verfahrens, des erfindungsgemäßen Computerprogramms und des erfindungsgemäßen Speichermediums kann auf die obige Beschreibung zu den entsprechenden Merkmalen der erfindungsgemäßen Fahrerassistenzvorrichtung verwiesen werden.

Ein Ausführungsbeispiel der Erfindung wird anhand der Zeichnungen näher erläutert. Es zeigen:
- Figur 1: schematisch den Aufbau eines spurgebundenen Fahrzeugs gemäß einem Ausführungsbeispiel der erfindungsgemäßen Fahrerassistenzvorrichtung,
- Figur 2: schematisch den Ablauf eines Ausführungsbeispiels des erfindungsgemäßen Verfahrens und
- Figur 3: eine beispielhafte Ansicht einer Anzeige der erfindungsgemäßen Fahrerassistenzvorrichtung.

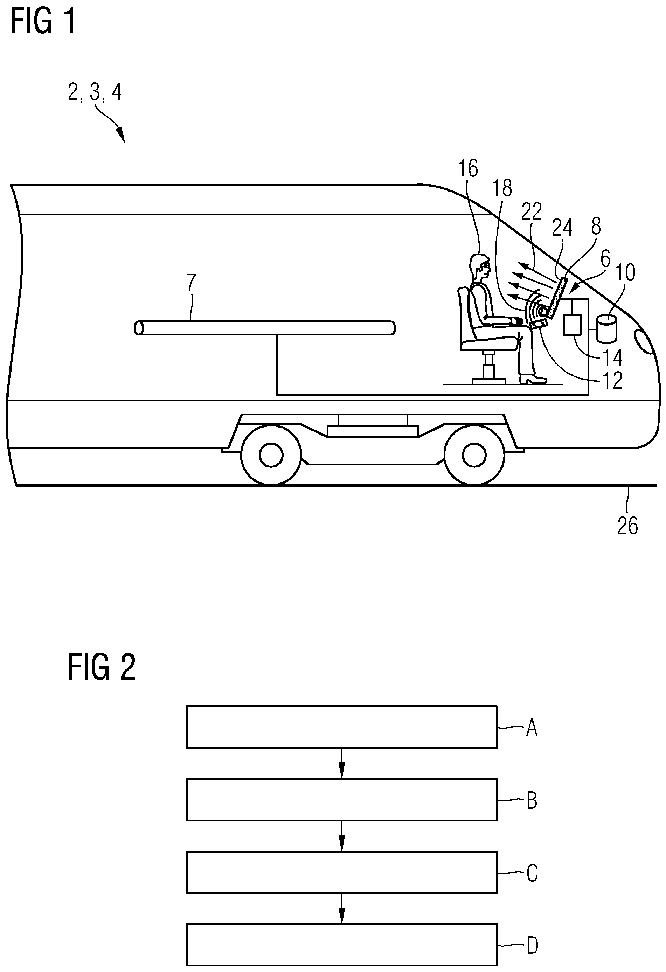

Figur 1 zeigt ein Fahrzeug 2, welches ein spurgebundenes Fahrzeug 3, insbesondere ein Schienenfahrzeug 4 ist. Das Fahrzeug 2 weist eine Fahrerassistenzvorrichtung 6 auf. Die Fahrerassistenzvorrichtung 6 weist eine Ausgabeeinrichtung 8, eine Speichereinrichtung 10, eine Eingabeeinrichtung 12 und eine Recheneinrichtung 14 auf. Diese Einrichtungen sind an ein Fahrzeugnetz 7, welches als Ethernet ausgebildet ist, datentechnisch angeschlossen.

Die Ausgabeeinrichtung 8 ist von einem Fahrzeugführer 16 wahrnehmbar. Zudem ist die Ausgabeeinrichtung 8 eingerichtet, wenigstens eine Informationsart einer Mehrzahl von Informationsarten auszugeben. Die Ausgabe ist dabei eine akustische wahrnehmbare Ausgabe 18, beispielsweise eine Sprachansage, oder eine optisch wahrnehmbare Ausgabe 22, beispielsweise eine Hinweismeldung, die auf einer Anzeige 24 der Ausgabeeinrichtung 8 angezeigt wird.

Das Fahrzeug 2 befährt während eines Fahrbetriebs in dem in Figur eins gezeigten Ausführungsbeispiel eine Fahrstrecke 26.

Figur 2 zeigt ein schematisches Ablaufdiagramm, welches den Ablauf des erfindungsgemäßen Verfahrens zum Betrieb der in Figur 1 gezeigten Fahrerassistenzvorrichtung 6 repräsentiert. In einem Verfahrensschritt A wird eine Mehrzahl unterschiedlicher Informationsarten bereitgestellt. Beispiele von Informationsarten sind Fahrempfehlungen, Navigationsinformationen, Unterhaltungsinformationen, sicherheitskritische Informationen, Entfernungsinformationen, Geschwindigkeitsinformationen, Informationen in Bezug auf Orte von Interesse entlang der Strecke, und/oder Verkehrsinformationen.

Die Informationsarten sind für die Ausgabe 18, 22 mittels der Ausgabeeinrichtung 8 vorgesehen.

In einem Verfahrensschritt B wird wenigstens eine Informationsart der Mehrzahl von Informationsarten einer Informationskategorie einer Mehrzahl von Informationskategorien zugeordnet. Die Zuordnung erfolgt mittels der Speichereinrichtung 10, welche eine Zuordnungstabelle für die Zuordnung zwischen Informationsart und Informationskategorie speichert. Die Mehrzahl von Informationskategorien umfasst beispielsweise:
- statische Routeninformationen, welche statische Informationen in Bezug auf die Fahrstrecke 26 repräsentieren, beispielsweise entlang der Strecke befindliche ortsfeste Objekte,
- dynamische Routeninformationen, welche dynamische Informationen in Bezug auf die Fahrstrecke 26 repräsentieren, beispielsweise Staus,
- Energiesparinformationen, welche Informationen zur Unterstützung einer energiesparenden Fahrweise repräsentieren, beispielsweise Fahrempfehlungen für einen energiesparenden Betrieb des Fahrzeugs 2,
- Batterieschutzinformationen, welche Informationen zur Unterstützung eines batterieschonenden Betriebs des Fahrzeugs repräsentieren, beispielsweise eine Batteriefüllstandanzeige,
- Zeitplaninformationen, welche Informationen zu einem Fahrplan des Fahrzeugs repräsentieren, beispielsweise Verspätungsinformationen,
- Warnungen, welche Informationen in Bezug auf ein Risiko für den Betrieb des Fahrzeugs 2 repräsentieren, beispielsweise Geschwindigkeitswarnungen.

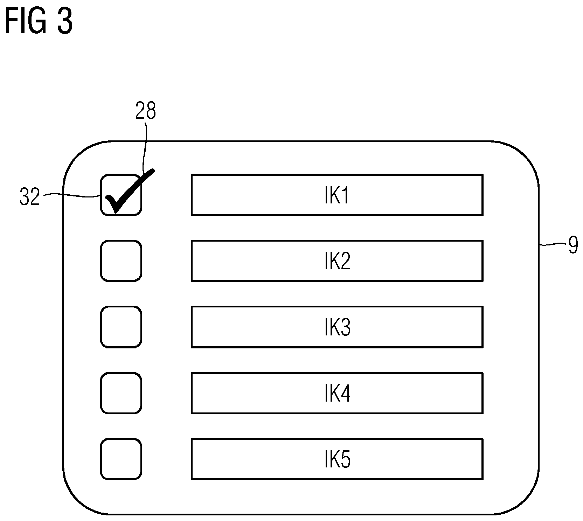

In einem Verfahrensschritt C wird wenigstens eine Informationskategorie IK1 der Mehrzahl von Informationskategorien unter Verwendung der Eingabeeinrichtung 12 durch den Fahrzeugführer 16 ausgewählt. Figur 3 zeigt eine beispielhafte Ansicht einer von dem Fahrzeugführer 16 wahrnehmbaren Anzeige 9 der Ausgabeeinrichtung 8. Die Informationskategorien IK1, IK2, IK3, und IK4 werden nach Art einer Liste dargestellt. Sogenannte Check-Boxen 32 dienen dazu, durch Setzen eines Hakens bei einer Check-Box eine der Informationskategorien IK1-IK4 auszuwählen. In der gezeigten Ansicht wurde die Informationskategorie IK1 durch Setzen des Hakens 28 ausgewählt. In dem gezeigten Ausführungsbeispiel steht die Informationskategorie IK1 für Warnungen. Demnach hat der Fahrzeugführer 16 ausgewählt, dass ausschließlich Warnungen durch die Ausgabeeinrichtung 8 ausgegeben werden sollen. Durch die Auswahl C wird die Informationskategorie IK1 für die Ausgabe vorgegeben.

In einem Verfahrensschritt D werden Informationsarten der ausgewählten und vorgegebenen Informationskategorie IK1 mittels der Ausgabeeinrichtung 8 ausgegeben. So werden beispielsweise unterschiedliche Arten von Warnungen während des Fahrbetriebs an den Fahrzeugführer 16 (im Falle eines der Warnung entsprechenden Risikos für den Betrieb des Fahrzeugs) durch die akustisch wahrnehmbaren Ausgaben 18 ausgegeben. In diesem Fall sind die Informationsarten der Informationskategorie "Warnung" beispielsweise Geschwindigkeitswarnungen.

Die Recheneinrichtung 14 dient zur Ausführung des beschriebenen erfindungsgemäßen Verfahrens, indem ein Computerprogramm, welches beispielsweise mittels der Speichereinrichtung 10 gespeichert wird, mittels der Recheneinrichtung 14 ausgeführt wird. Die Speichereinrichtung 10 ist ein Beispiel für ein computerlesbares Speichermedium, welches Befehle umfasst, die bei Ausführung durch die Recheneinrichtung 14 diese veranlassen, das Verfahren auszuführen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch die nachfolgenden Ansprüche definierten Schutzumfang der Erfindung zu verlassen.

## Patentansprüche

1. Fahrerassistenzvorrichtung für ein Fahrzeug,
umfassend:
- eine von einem Fahrzeugführer (16) wahrnehmbare Ausgabeeinrichtung (8), welche eingerichtet ist, wenigstens eine Informationsart einer bereitgestellten, für eine Ausgabe mittels der Ausgabeeinrichtung (8) vorgesehenen Mehrzahl unterschiedlicher Informationsarten, umfassend Fahrempfehlungen, Navigationsinformationen, Unterhaltungsinformationen, sicherheitskritische Informationen, Entfernungsinformationen, Geschwindigkeitsinformationen, Informationen in Bezug auf Orte von Interesse entlang der Strecke und/oder Verkehrsinformationen auszugeben,
- eine Speichereinrichtung (10), welche eingerichtet ist, jede Informationsart der Mehrzahl von Informationsarten einer Informationskategorie (IK1) einer Mehrzahl von Informationskategorien (IK1-IK4), umfassend statische Routeninformationen, dynamische Routeninformationen, Energiesparinformationen, Batterieschutzinformationen, Zeitplaninformationen, und/oder Warnungen zuzuordnen, wobei die Speichereinrichtung eine Zuordnungstabelle für die Zuordnung zwischen Informationsart und Informationskategorie speichert,
- eine Eingabeeinrichtung (12), welche eingerichtet ist, eine Auswahl wenigstens einer Informationskategorie (IK1) der Mehrzahl von Informationskategorien (IK1-IK4) zu empfangen, wobei die wenigstens eine Informationskategorie (IK1) durch die Auswahl für die Ausgabe (18, 22) vorgegeben wird,
- wobei die Ausgabeeinrichtung (8) eingerichtet ist, ausschließlich Informationsarten der ausgewählten Informationskategorie (IK1) auszugeben.

2. Fahrerassistenzvorrichtung nach Anspruch 1
bei welchem die statischen Routeninformationen statische Informationen in Bezug auf eine Fahrstrecke (26) repräsentieren.

3. Fahrerassistenzvorrichtung nach wenigstens einem der vorhergehenden Ansprüche,
bei welchem die dynamischen Routeninformationen dynamische Informationen in Bezug auf eine Fahrstrecke (26) repräsentieren.

4. Fahrerassistenzvorrichtung nach wenigstens einem der vorhergehenden Ansprüche,
bei welchem die Energiesparinformationen Informationen zur Unterstützung einer energiesparenden Fahrweise repräsentieren.

5. Fahrerassistenzvorrichtung nach wenigstens einem der vorhergehenden Ansprüche,
bei welchem die Batterieschutzinformationen Informationen zur Unterstützung eines batterieschonenden Betriebs des Fahrzeugs (2) repräsentieren.

6. Fahrerassistenzvorrichtung nach wenigstens einem der vorhergehenden Ansprüche,
bei welchem die Zeitplaninformationen Informationen zu einem Fahrplan des Fahrzeugs (2) repräsentieren.

7. Fahrerassistenzvorrichtung nach wenigstens einem der vorhergehenden Ansprüche,
bei welchem die Warnungen Informationen in Bezug auf ein Risiko für den Betrieb des Fahrzeugs (2) repräsentieren.

8. Fahrerassistenzvorrichtung nach wenigstens einem der vorhergehenden Ansprüche,
bei welchem
die Ausgabe eine akustisch wahrnehmbare Ausgabe (18) umfasst.

9. Spurgebundenes Fahrzeug, umfassend eine Fahrerassistenzvorrichtung (6) nach wenigstens einem der vorhergehenden Ansprüche 1 bis 8.

10. Verfahren zum Betrieb einer Fahrerassistenzvorrichtung (6) für ein Fahrzeug (2),
bei welchem
- eine Mehrzahl unterschiedlicher Informationsarten, umfassend Fahrempfehlungen, Navigationsinformationen, Unterhaltungsinformationen, sicherheitskritische Informationen, Entfernungsinformationen, Geschwindigkeitsinformationen, Informationen in Bezug auf Orte von Interesse entlang der Strecke und/oder Verkehrsinformationen, bereitgestellt wird (A), welche für eine Ausgabe (18, 22) mittels einer von einem Fahrzeugführer (16) wahrnehmbaren Ausgabeeinrichtung (8) der Fahrerassistenzvorrichtung (6) vorgesehen sind,
- jede Informationsart der Mehrzahl von Informationsarten einer Informationskategorie (IK1) einer Mehrzahl von Informationskategorien (IK1-IK4), umfassend statische Routeninformationen, dynamische Routeninformationen, Energiesparinformationen, Batterieschutzinformationen, Zeitplaninformationen, und/oder Warnungen zugeordnet wird (B), wobei eine Zuordnungstabelle für die Zuordnung zwischen Informationsart und Informationskategorie gespeichert wird,
- wenigstens eine Informationskategorie (IK1) der Mehrzahl von Informationskategorien (IK1-IK4) unter Verwendung einer Eingabeeinrichtung (12) für die Ausgabe (18, 22) ausgewählt wird (C),
- die wenigstens eine Informationskategorie (IK1) durch die Auswahl für die Ausgabe (18, 22) vorgegeben wird und
- ausschließlich Informationenarten der ausgewählten Informationskategorie (IK1) mittels der Ausgabeeinrichtung (8) ausgegeben werden (D).

11. Computerprogramm, umfassend Befehle, die bei der Ausführung des Programms durch eine Recheneinrichtung (14) eines Fahrzeugs (2) diese veranlassen, das Verfahren nach Anspruch 10 auszuführen.

12. Computerlesbares Speichermedium, umfassend Befehle, die bei der Ausführung durch eine Recheneinrichtung (14) eines Fahrzeugs (2) diese veranlassen, das Verfahren nach Anspruch 10 auszuführen.

## Claims

1. Driver assistance device for a vehicle, comprising:
- an output facility (8) which can be perceived by a vehicle driver (16) and which is designed to output at least one type of information of a supplied plurality of different types of information provided for an output by means of the output facility (8), comprising driving recommendations, navigation information, entertainment information, safety-critical information, distance information, speed information, information relating to locations of interest along the route and/or traffic information,
- a storage facility (10), which is designed to assign each type of information of the plurality of types of information to an information category (IK1) of a plurality of information categories (IK1 - IK4), comprising static route information, dynamic route information, energy saving information, battery protection information, timetable information and/or warnings, wherein the storage facility stores an assignment table for the assignment between type of information and information category,
- an input facility (12), which is designed to receive a selection of at least one information category (IK1) of the plurality of information categories (IK1-IK4), wherein the at least one information category (IK1) is predetermined by the selection for the output (18, 22),
- wherein the output facility (8) is designed to exclusively output types of information of the selected information category (IK1).

2. Driver assistance device according to claim 1,
in which the static route information represents static information relating to a driving route (26).

3. Driver assistance device according to at least one of the preceding claims,
in which the dynamic route information represents dynamic information relating to a driving route (26).

4. Driver assistance device according to at least one of the preceding claims, in which the energy saving information represents information for supporting an energy-saving manner of driving.

5. Driver assistance device according to at least one of the preceding claims, in which the battery protection information represents information for supporting a battery saving operation of the vehicle (2).

6. Driver assistance device according to at least one of the preceding claims,
in which the timetable information represents information relating to a schedule of the vehicle (2).

7. Driver assistance device according to at least one of the preceding claims,
in which the warnings represent information relating to a risk to the operation of the vehicle (2).

8. Driver assistance device according to at least one of the preceding claims,
in which
the output comprises an acoustically perceivable output (18).

9. Track-bound vehicle, comprising a driver assistance device (6) according to at least one of the preceding claims 1 to 8.

10. Method for operating a driver assistance device (6) for a vehicle (2), in which
- a plurality of different types of information, comprising driving recommendations, navigation information, entertainment information, safety-critical information, distance information, speed information, information relating to locations of interest along the route and/or traffic information is supplied (A), which is provided for an output (18, 22) by means of an output facility (8) of the driver assistance device (6) which can be perceived by a vehicle driver (16),
- each type of information of the plurality of types of information is assigned (B) to an information category (IK1) of a plurality of information categories (IK1 - IK4), comprising static route information, dynamic route information, energy saving information, battery protection information, timetable information and/or warnings, wherein an assignment table is stored for the assignment between type of information and information category,
- at least one information category (IK1) of the plurality of information categories (IK1 - IK4) is selected (C) for the output (18, 22) using an input facility (12),
- the at least one information category (IK1) is predetermined by the selection for the output (18, 22) and
- exclusively types of information of the selected information category (IK1) are output (D) by means of the output facility (8).

11. Computer program comprising commands, which, when the program is executed by a computing facility (14) of a vehicle (2), trigger this to execute the method according to claim 10.

12. Computer-readable storage medium, comprising commands which, upon execution by a computing facility (14) of a vehicle (2), trigger this to execute the method according to claim 10.

## Revendications

1. Installation d'aide à la conduite pour un véhicule, comprenant :
- un dispositif (8) de sortie perceptible par un conducteur (16) du véhicule et agencé pour sortir au moins un type d'information, d'une pluralité mise à disposition et prévue pour une sortie au moyen du dispositif (8) de sortie, de types d'information différents,
comprenant des recommandations de circulation, des informations de navigation, des informations d'entretien, des informations critiques du point de vue de la sécurité, des informations d'éloignement, des informations de vitesse, des informations relatives à l'emplacement auquel on s'intéresse le long de la voie et/ou des informations de trafic,
- un dispositif (10) de mémoire, qui est agencé pour affecter chaque type d'information de la pluralité de types d'information à une catégorie (IK1) d'information d'une pluralité de catégories (IK1-IK4) d'information comprenant des informations statiques d'itinéraire, des informations dynamiques d'itinéraire, des informations d'économie d'énergie, des informations de protection de batterie, des informations de planification temporelle et/ou des avertissements, dans lequel le dispositif de mémoire met en mémoire une table d'affectation pour l'affectation entre types d'information et catégories d'information,
- un dispositif (12) d'entrée, qui est agencé pour recevoir une sélection d'au moins une catégorie (IK1) d'information de la pluralité de catégories (IK1-IK4) d'information, dans laquelle la au moins une catégorie (IK1) d'information est donnée à l'avance par la sélection pour la sortie (18, 22),
- dans laquelle le dispositif (8) de sortie est agencé pour sortir exclusivement des types d'information de la catégorie (IK1) d'information sélectionnée.

2. Installation d'aide à la conduite suivant la revendication 1,
dans laquelle les informations statiques d'itinéraire représentent des informations statiques se rapportant à une voie (26) de circulation.

3. Installation d'aide à la conduite suivant au moins l'une des revendications précédentes,
dans laquelle les informations dynamiques d'itinéraire représentent des informations dynamiques relatives à une voie (26) de circulation.

4. Installation d'aide à la conduite suivant au moins l'une des revendications précédentes,
dans laquelle les informations d'économie d'énergie représentent des informations facilitant un mode de circulation économisant de l'énergie.

5. Installation d'aide à la conduite suivant au moins l'une des revendications précédentes,
dans laquelle les informations de protection de batterie représentent des informations favorisant un fonctionnement ménageant la batterie du véhicule (2).

6. Installation d'aide à la conduite suivant au moins l'une des revendications précédentes,
dans laquelle les informations de planification temporelle représentent des informations se rapportant à un plan de circulation du véhicule (2).

7. Installation d'aide à la conduite suivant au moins l'une des revendications précédentes,
dans laquelle les avertissements représentent des informations se rapportant à un danger pour le fonctionnement du véhicule (2).

8. Installation d'aide à la conduite suivant au moins l'une des revendications précédentes,
dans laquelle la sortie comprend une sortie (18) perceptible acoustiquement.

9. Véhicule guidé sur rail comprenant une installation (6) d'aide à la conduite suivant au moins l'une des revendications 1 à 8 précédentes.

10. Procédé pour faire fonctionner une installation (6) d'aide à la conduite pour un véhicule (2),
dans lequel
- on procure (A) une pluralité de types d'information différents comprenant des recommandations de circulation, des informations de navigation, des informations d'entretien, des informations critiques du point de vue de la sécurité, des informations d'éloignement, des informations de vitesse, des informations relatives à l'emplacement auquel on s'intéresse le long de la voie et/ou des informations de trafic, qui sont prévues pour une sortie (18, 22), au moyen d'un dispositif (8) de sortie perceptible par un conducteur (16) du véhicule, de l'installation (6) d'aide à la conduite,
- on affecte (B) chaque type d'information de la pluralité de types d'information à une catégorie (IK1) d'information d'une pluralité de catégories (IK1-IK4) d'information comprenant des informations statiques d'itinéraire, des informations dynamiques d'itinéraire, des informations d'économie d'énergie, des informations de protection de batterie, des informations de planification temporelle et/ou des avertissements, dans lequel le dispositif de mémoire met en mémoire une table d'affectation pour l'affectation entre types d'information et catégories d'information,
- on sélectionne (C) pour la sortie (18, 22) une catégorie (IK1) d'information de la pluralité de catégories (IK1-IK4) d'information en utilisant un dispositif (12) d'entrée,
- on donne à l'avance pour la sortie (18, 22) la au moins une catégorie (IK1) d'information par la sélection et
- on sort (D) au moyen du dispositif (8) de sortie exclusivement des types d'information de la catégorie (IK1) d'information sélectionnée.

11. Programme d'ordinateur, comprenant des instructions qui, lors de l'exécution du programme par un dispositif (14) informatique d'un véhicule (2), font que celui-là exécute le procédé suivant la revendication 10.

12. Support de mémoire, déchiffrable par ordinateur, comprenant des instructions qui, lors de l'exécution par une unité (14) informatique d'un véhicule (2), font que celui-là exécute le procédé suivant la revendication 10.
